(19) **Europäisches Patentamt / European Patent Office / Office européen des brevets**

(11) **EP 1 748 577 B1**

(12) **FASCICULE DE BREVET EUROPEEN**

(45) Date de publication et mention
de la délivrance du brevet:
**03.11.2010 Bulletin 2010/44**

(51) Int Cl.:
**H04B 7/04** *(2006.01)* **H04B 1/69** *(2006.01)*

(21) Numéro de dépôt: **06291212.6**

(22) Date de dépôt: **26.07.2006**

(54) **Procédé et dispositif de communication multi-antennes ultra-large bande utilisant des impulsions de Hermite**

Verfahren und Vorrichtung zur mehrantennen Ultrabreitbandkommunikation mittels Hermite Impulsen

Method and apparatus of ultrawide-band multi-antenna communication using Hermitian pulses

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.07.2005 FR 0508020**

(43) Date de publication de la demande:
**31.01.2007 Bulletin 2007/05**

(73) Titulaire: **Commissariat à l'Énergie Atomique et aux Énergies Alternatives
75015 Paris (FR)**

(72) Inventeurs:
• **Abou Rjeily, Chadi
38406 Saint-Martin-D'Heres (FR)**
• **Daniele, Norbert
38330 Montbonnot (FR)**

(74) Mandataire: **Bonnans, Arnaud
Santarelli,
14 avenue de la Grande Armée,
BP 237
75822 Paris Cedex 17 (FR)**

(56) Documents cités:
• **WEISENHORN M ET AL: "Performance of binary antipodal signaling over the indoor UWB MIMO channel" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 mai 2003 (2003-05-11), pages 2872-2878, XP010642970 ISBN: 0-7803-7802-4**

• **KWANG PARK ET AL: "Effects of timing jitter in low-band DS-BPSK UWB system under Nakagami-M fading channels" TENCON 2004. 2004 IEEE REGION 10 CONFERENCE CHIANG MAI, THAILAND NOV. 21-24, 2004, PISCATAWAY, NJ, USA, IEEE, 21 novembre 2004 (2004-11-21), pages 149-152, XP010797928 ISBN: 0-7803-8560-8**

• **NEY DA SILVA J A ET AL: "Performance Comparison of Binary and Quaternary UWB Modulation Schemes" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 décembre 2003 (2003-12-01), pages 789-793, XP010678173 ISBN: 0-7803-7974-8**

• **BIAGI M ET AL: "A simple multiple-antenna ultra wide band transceiver scheme for 4th generation WLAN" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA, IEEE, US, 6 octobre 2003 (2003-10-06), pages 1903-1907, XP010701067 ISBN: 0-7803-7954-3**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte à un procédé et à un dispositif de communication multi-antennes ultra-large bande utilisant des impulsions de Hermite.

Elle appartient au domaine des systèmes de communication sans fils fondés sur la technologie multi-antennes Ultra-Large Bande (MA ULB, en anglais *"MIMO UWB, Multiple Input Multiple Output Ultra Wide Band')*. Cette technologie repose sur l'émission de signaux dont le rapport entre la largeur de la bande et la fréquence centrale est supérieur à 20 % ou dont la bande passante est supérieure à 500 MHz.

L'invention s'applique en particulier à des terminaux équipés de plusieurs antennes capables de traiter des services multimédia, dans des réseaux de télécommunications du type réseau personnel ou réseau local sans fils à très haut débit (c'est-à-dire typiquement quelques centaines de Mbits/s).

Dans toute la suite, on considère un système de communication avec P antennes d'émission et Q antennes de réception, P et Q étant des entiers strictement positifs.

L'invention entre dans le cadre des communications ULB fonctionnant en mode impulsionnel. Cette technique consiste à transmettre des impulsions de courte durée (de l'ordre de la nanoseconde). Dans la plupart des cas, l'information est codée via la position de ces impulsions (modulation PPM, en anglais *"Pulse Position Modulation"*) et/ou via l'amplitude de ces impulsions (modulation PAM, en anglais *"Pulse Amplitude Modulation"*).

La détection des signaux ULB de type impulsion est effectuée par des récepteurs appartenant à deux catégories :

- les récepteurs du type Rake où, sur L voies parallèles, correspondant à un Rake d'ordre L, le signal reçu est corrélé avec L versions retardées et convenablement pondérées de la forme d'impulsion, la connaissance de ces retards et amplitudes étant acquise pendant une phase d'apprentissage ; et
- les récepteurs de type corrélateurs où, pour détecter les symboles émis, le signal reçu est corrélé avec un signal de référence, ce signal de référence étant construit pendant la phase d'estimation du canal.

L'invention s'applique à la première catégorie de récepteurs ci-dessus.

Une façon d'augmenter la capacité et d'améliorer les performances des systèmes de communication ULB consiste à appliquer des techniques de traitement multi-antennes MIMO. Les systèmes utilisant de telles techniques se classent en deux catégories :

- les systèmes codés, où un codage spatio-temporel d'un flux de données permet de profiter de la diversité de transmission et d'améliorer les performances, mais où la redondance introduite par le code diminue le débit de l'émetteur ; et
- les systèmes non codés, mettant en oeuvre un multiplexage spatial, où les flux de données sur les antennes d'émission sont totalement indépendants, ce qui permet d'augmenter le débit de l'émetteur. Cependant, on observe de nombreuses perturbations entre les signaux émis en parallèle.

L'invention appartient à la deuxième catégorie de systèmes ci-dessus.

On connaît notamment deux architectures d'émetteurs MIMO ULB.

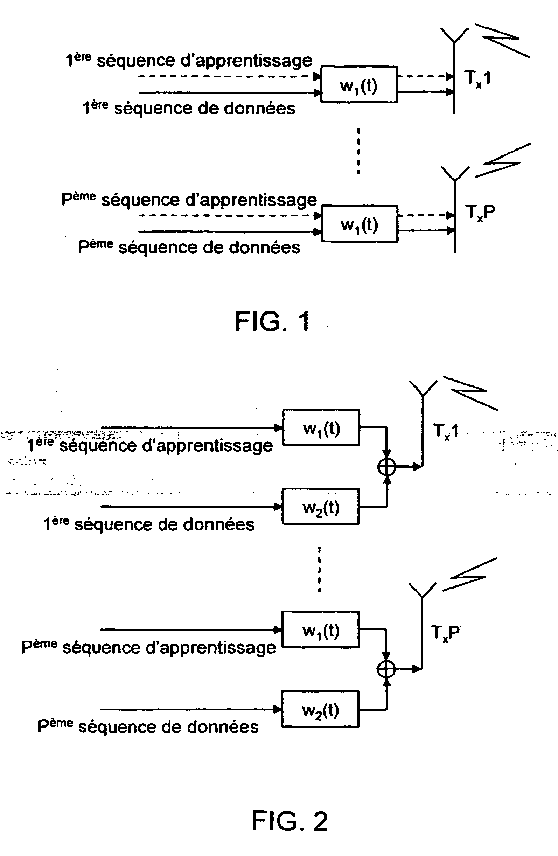

La première est présentée par M. WEISENHORN et al. dans un article intitulé "Performance of binary antipodal signaling over the indoor UWB MIMO channel", publié à l'occasion de IEEE conference on communications, vol. 4, pages 2872 à 2878, mai 2003, ainsi que par W. SIRIWONGPAIRAT et al. dans un article intitulé "On the performance evaluation of TH and DS UWB MIMO systems", publié à l'occasion de IEEE conference on wireless communications and networking, vol. 3, pages 1800 à 1805, 2004 et est illustrée sur la **figure 1**.

Un tel émetteur ULB possède P antennes d'émission et utilise le multiplexage spatial. Une phase d'apprentissage, consistant à émettre des séquences (représentées en tirets sur la figure) connues du récepteur, précède la transmission de données. Toutes les antennes émettent la même forme d'impulsion $w_1(t)$, qui correspond à la $n^{\text{ème}}$ dérivée d'une gaussienne.

Le débit est augmenté d'un facteur égal au nombre d'antennes d'émission, mais cette approche simple limite les performances du système.

Une seconde architecture d'émetteur ULB est présentée par E. BACCARELLI et al. dans un article intitulé "A simple multi-antenna transceiver for ultra wide band based 4GWLANs", paru dans IEEE WCNC, vol. 3, pages 1782 à 1787, mars 2004, ainsi que par E. BACCARELLI et al. dans un article intitulé "A novel multi-antenna impulse radio UWB transceiver for broadband high-throughput 4G WLANs", paru dans IEEE communications letters, vol. 8, n° 7, pages 419 à 421, juillet 2004, et est illustrée par la **figure 2**.

Comme le montre la figure 2, chaque antenne d'émission émet simultanément deux formes d'onde $w_1(t)$ et $w_2(t)$, $w_i(t)$ étant une impulsion correspondant à la $i^{\text{ème}}$ fonction d'Hermite. Une de ces formes d'onde module la séquence d'apprentissage et l'autre sert à l'émission des données. Par l'émission simultanée des séquences d'apprentissage et de données, cette architecture est très différente de l'architecture de la figure 1, où la phase d'apprentissage précède la phase d'émission de données.

Les deux architectures connues qui viennent d'être brièvement décrites permettent, certes, d'augmenter le débit de l'émetteur, mais au détriment de la qualité des signaux reçus, notamment du fait des perturbations entre signaux émis.

La présente invention a pour but de remédier aux inconvénients de l'art antérieur.

Dans ce but, la présente invention propose un procédé d'émission de signaux ultra-large bande par l'intermédiaire d'une pluralité d'antennes d'émission, comportant une phase d'émission de séquences d'apprentissage suivie d'une phase d'émission de données, remarquable en ce qu'il comporte une étape suivant laquelle chaque antenne de la pluralité d'antennes d'émission émet une forme d'onde utilisant une impulsion de Hermite, unique et orthogonale aux formes d'onde émises par les autres antennes.

Ainsi, l'utilisation d'impulsions de Hermite d'ordre différent pour chaque antenne d'émission introduit une orthogonalité entre ces antennes et permet simultanément d'améliorer les performances et d'augmenter le débit, car la diversité spatiale de transmission est mise à profit.

Un système de communication ULB émet des séquences d'impulsions, dont la période moyenne d'émission est appelée PRP (en anglais "*Pulse Repetition Period*") et dont la position et/ou l'amplitude sont porteuses d'information. Lorsque l'information est modulée sur M positions possibles, on parle de modulation M-PPM (en anglais *"M-ary Pulse Position Modulation"*) et lorsque l'information est modulée sur M' amplitudes possibles, on parle de modulation M'-PAM (en anglais *"M-ary Pulse Amplitude Modulation"*).

Lorsqu'on associe une M-PPM avec une M'-PAM, chaque symbole émis prend une valeur parmi MM' valeurs possibles. A chaque symbole S, on associe une amplitude (a) et une position (d) comme suit :

$$S \equiv (a,d) \text{ où } a \in \{(2m'\text{-}1\text{-}M'), m' = 1, \ldots, M'\} \text{ et } d \in \{0, \ldots, M\text{-}1\}.$$

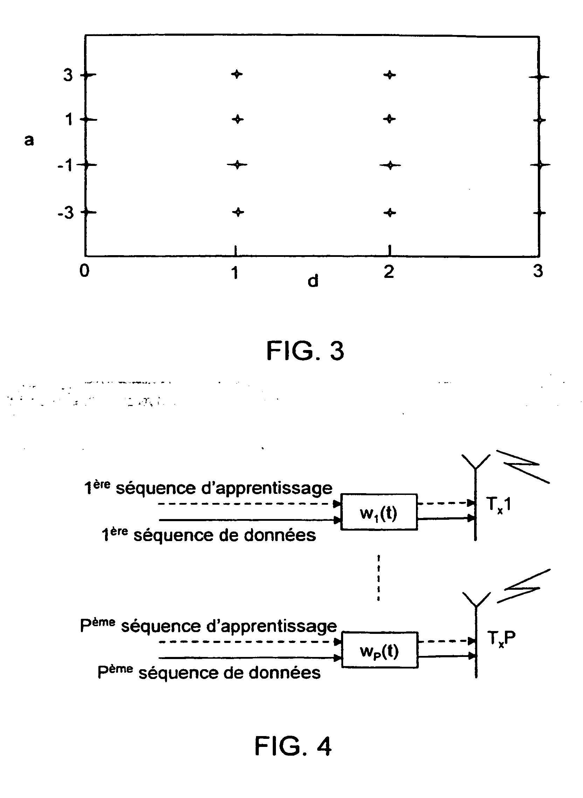

La **figure 3** représente pour mémoire la constellation 4-PPM-4-PAM. La position d prend des valeurs dans l'ensemble {0, 1, 2, 3} et l'amplitude a prend des valeurs dans l'ensemble {-3, -1, 1, 3}. Il est à noter que la séparation temporelle entre deux positions successives de modulation s'appelle PRI (en anglais *"Pulse Repetition Interval"*). A la fin de chaque PRI, on peut ajouter un intervalle de garde (en anglais *"GAP"*) pour éliminer l'interférence inter-symboles. On a alors : PRP = M.PRI + GAP.

Dans un mode particulier de réalisation, le procédé d'émission met en oeuvre une modulation d'impulsions en position ou PPM (en anglais *"Pulse Position Modulation"*) combinée avec une modulation d'impulsions en amplitude ou PAM (en anglais *"Pulse Amplitude Modulation"*).

Cette modulation conjointe PPM-PAM est particulièrement avantageuse car, si la PPM est d'ordre M et la PAM est d'ordre M', cela permet aux données d'être transmises $\log_2(MM')$ fois plus rapidement qu'en l'absence d'une telle modulation.

Selon une caractéristique particulière, lors de la phase d'émission de séquences d'apprentissage, au niveau de chaque antenne de la pluralité d'antennes d'émission, on effectue une multiplication terme à terme d'une séquence de symboles d'apprentissage $(S_{N_{seq}}, \ldots, S_1)$ avec une séquence de codes de parité $\left(c_{N_{seq}}^{(i)}, \cdots, c_1^{(i)}\right)$ où chaque code de parité vérifie la relation suivante :

$$c_1^{(i)}c_1^{(j)} + c_2^{(i)}c_2^{(j)} + \cdots + c_{N_{seq}}^{(i)}c_{N_{seq}}^{(j)} = 0 \text{ pour } i,j = 1, 2, \ldots, P \text{ et } i \neq j,$$

où $N_{seq}$ est la taille des symboles, $c_k^{(i)}$ est le $k^{ème}$ élément du code de parité de la $i^{ème}$ antenne et P est le nombre total d'antennes d'émission.

La relation ci-dessus traduit l'orthogonalité des codes de parité des antennes prises 2 à 2.

Dans le même but que celui indiqué plus haut, la présente invention propose également un dispositif d'émission de signaux ultra-large bande comportant une pluralité d'antennes d'émission, adapté à émettre des séquences d'apprentissage puis des données, remarquable en ce que chaque antenne de la pluralité d'antennes d'émission émet une forme d'onde utilisant une impulsion de Hermite, unique et orthogonale aux formes d'onde émises par les autres antennes.

**EP 1 748 577 B1**

Toujours dans le même but, l'invention propose en outre un procédé de réception de signaux ultra-large bande par l'intermédiaire d'une pluralité d'antennes de réception, remarquable en ce qu'il consiste à recevoir des signaux émis par l'intermédiaire d'un procédé d'émission tel que ci-dessus.

Toujours dans le même but, l'invention propose également un dispositif de réception de signaux ultra-large bande comportant une pluralité d'antennes de réception, remarquable en ce qu'il est adapté à recevoir des signaux émis au moyen d'un dispositif d'émission tel que ci-dessus.

Un tel dispositif de réception est optimal pour démoduler des formes d'ondes ULB émises basées sur des impulsions de Hermite.

Les caractéristiques particulières et les avantages du dispositif d'émission, du procédé de réception et du dispositif de réception étant similaires à ceux du procédé d'émission, ils ne sont pas répétés ici.

D'autres aspects et avantages de l'invention apparaîtront à la lecture de la description détaillée qui suit de modes particuliers de réalisation, donnés à titre d'exemples non limitatifs. La description se réfère aux dessins qui l'accompagnent, dans lesquels :

- la figure 1, déjà décrite, représente de façon schématique une première architecture connue d'émetteur MIMO ULB ;
- la figure 2, déjà décrite, représente de façon schématique une seconde architecture connue d'émetteur MIMO ULB ;
- la figure 3, déjà décrite, illustre la constellation associée à la modulation 4-PPM-4-PAM ;
- la figure 4 représente de façon schématique l'architecture d'un émetteur ULB conforme à la présente invention, dans un mode particulier de réalisation ;
- la figure 5 représente de façon schématique un émetteur ULB conforme à la présente invention avec 2 antennes, pendant la phase d'apprentissage, dans un mode particulier de réalisation ;
- la figure 6 représente de façon schématique un émetteur ULB conforme à la présente invention avec P antennes, pendant la phase d'émission des données, dans un mode particulier de réalisation ;
- la figure 7 représente de façon schématique un bloc corrélateur inclus dans un module d'estimation de canal d'un récepteur apte à mettre en oeuvre la présente invention, dans un mode particulier de réalisation ;
- les figures 8 et 9 représentent de façon schématique d'autres parties d'un module d'estimation de canal d'un récepteur apte à mettre en oeuvre la présente invention, dans un mode particulier de réalisation ;
- la figure 10 représente de façon schématique l'étage d'estimation de canal qui suit la q$^{\text{ème}}$ antenne de réception dans un système de communication conforme à la présente invention ayant P antennes d'émission et un Rake d'ordre L, dans un mode particulier de réalisation ; et
- la figure 11 représente de façon schématique une partie de l'étage de détection inclus dans un récepteur apte à mettre en oeuvre la présente invention, dans un mode particulier de réalisation.

Comme le montre la **figure 4**, le procédé d'émission conforme à la présente invention comporte deux phases : émission pendant le mode d'apprentissage, pendant 1 % à 10 % du temps de communication, et émission des symboles d'information, pendant 90 % à 99 % du temps de communication. Les deux séquences (apprentissage et données) d'une même antenne d'émission utilisent la même forme d'onde $w_i(t)$, qui est orthogonale aux impulsions émises par les autres antennes.

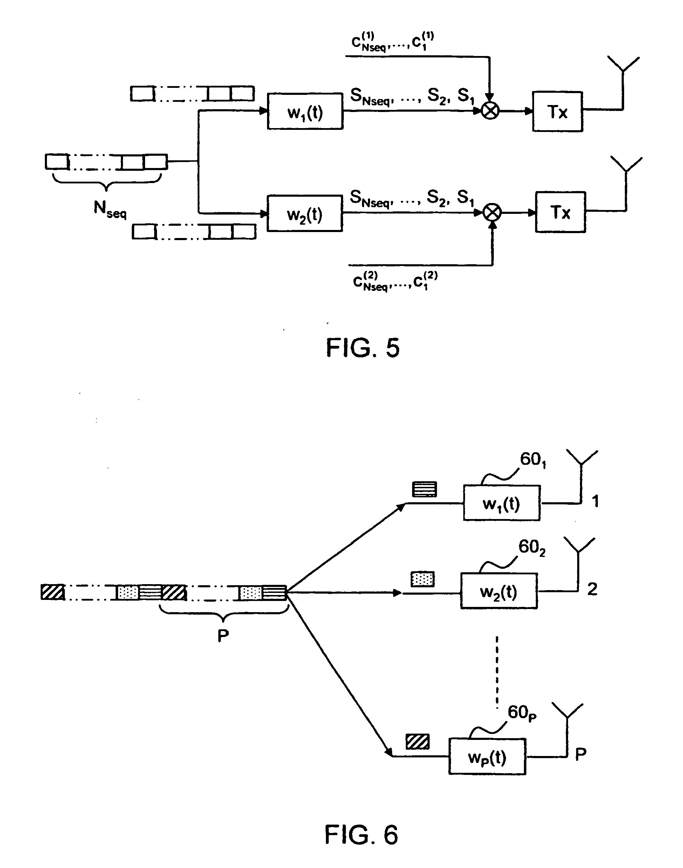

On décrit d'abord la phase d'apprentissage, en liaison avec la **figure 5**, où, à titre d'exemple nullement limitatif, on a un nombre d'antennes d'émission P = 2. Ainsi, pour i = 1, 2, la forme d'onde $w_i(t)$ correspond au filtre de mise en forme de la i$^{\text{ème}}$ impulsion de Hermite.

La phase d'apprentissage consiste à émettre une séquence de symboles de taille $N_{seq}$. Cette séquence est connue du récepteur et va servir à effectuer l'estimation du canal. Les symboles de la séquence d'apprentissage peuvent prendre n'importe quelle valeur. Dans l'exemple non limitatif décrit ici, on considère que tous ces symboles sont égaux et prennent la valeur "1". Cette séquence est ensuite divisée en P séquences correspondant à P antennes d'émission.

Sur chacune des P branches, on multiplie terme à terme la séquence de symboles d'apprentissage avec une séquence de codes de parité. Chaque séquence de codes de parités contient $N_{seq}$ éléments qui peuvent prendre les valeurs $\pm$ 1.

Conformément à la présente invention, pour chaque antenne, on construit un code de parité de longueur $N_{seq}$ qui est orthogonal aux codes de parité de toutes les autres antennes. Plus précisément, les codes de parité vérifient la relation suivante :

$$c_1^{(i)}c_1^{(j)} + c_2^{(i)}c_2^{(j)} + \cdots + c_{Nseq}^{(i)}c_{Nseq}^{(j)} = 0 \text{ pour i,j = 1, 2, ..., P et i} \neq \text{j,}$$

où $c_k^{(i)}$ est le k$^{ème}$ élément du code de parité de la i$^{ème}$ antenne.

La construction de ces codes de parité pour n'importe quelles valeurs de P et $N_{seq}$ telles que $P \leq N_{seq}$ est simple à partir des matrices d'Hadamard, par exemple.

On décrit maintenant la phase d'émission des données, en liaison avec la **figure 6**.

Pendant cette phase, l'émission consiste à démultiplexer un flux de symboles, dont chacun est représenté avec un motif différent sur la figure, en P flux correspondant respectivement aux P antennes d'émission. Les symboles démultiplexés sont ensuite modulés en position et en amplitude et transmis sur les P antennes. Il est à noter que pour simplifier la figure, on a considéré que les modules $60_1$, $60_2$, ..., $60_P$ symbolisaient à la fois la modulation, la mise en forme de l'impulsion de Hermite et l'équipement terminal d'émission.

Un système de réception adapté à traiter des signaux émis par un système d'émission tel que décrit précédemment va maintenant être décrit.

Un tel système comporte deux blocs fonctionnels : le premier bloc a pour fonction l'estimation de canal et le deuxième bloc a pour fonction l'utilisation de cette estimation pour effectuer la détection des symboles porteurs de l'information.

Ces blocs sont avantageusement réalisés sous forme numérique et sont donc précédés, de façon connue en soi, par une interface de réception radio-fréquence comportant notamment un amplificateur à faible bruit ou LNA (en anglais *"Low Noise Amplifier"*), un filtre passe-bande, etc., ainsi que par un bloc de discrétisation. Ces éléments, de conception classique, ne seront pas détaillés ici car ils sont bien connus de l'homme du métier et l'invention ne nécessite nullement de les modifier.

Comme les symboles émis pendant la phase d'apprentissage sont constitués de "1", le signal reçu correspond à la réponse composite, c'est-à-dire à la convolution de l'impulsion émise avec le canal de propagation, lequel est du type multi-trajets.

Pour un système ayant P antennes d'émission et Q antennes de réception, la sortie de chaque antenne est tout d'abord échantillonnée à la fréquence de Nyquist, puis quantifiée. Supposons que chaque trame correspondant à une période moyenne d'émission ou PRP est échantillonnée sur $N_{ech}$ échantillons tels que :

$$N_{ech} = \text{période trame / période d'échantillonnage}$$

On définit de même le nombre $N_{imp}$ d'échantillons par durée d'impulsion ($N_{imp} << N_{ech}$) :

$$N_{imp} = \text{durée d'une impulsion / période d'échantillonnage}$$

Les échantillons de la p$^{ème}$ impulsion sont représentés par $w^{(p)}(1)$, ..., $w^{(p)}(N_{imp})$.

Ainsi, en sortie de chaque antenne de réception, on a une séquence de $N_{seq}$ trames, correspondant à $N_{seq}$ symboles d'apprentissage, chacune de ces trames contenant $N_{ech}$ échantillons. Le nombre total d'échantillons est $N_{seq}N_{ech}$. Le n$^{ème}$ échantillon en sortie de la q$^{ème}$ antenne est noté $r_n^{(q)}$.

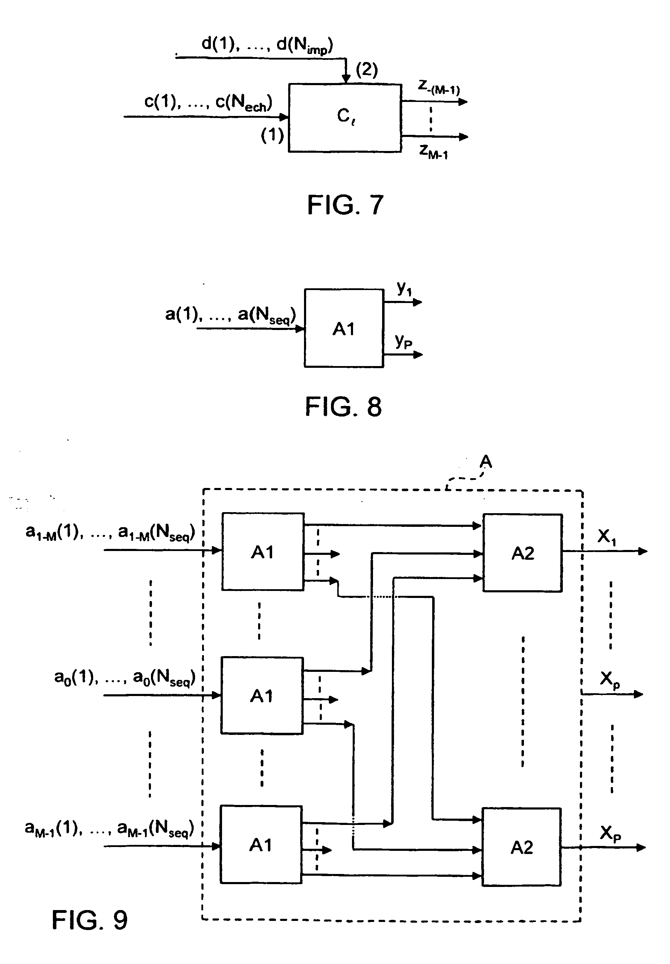

La **figure 7** représente la première partie du bloc d'estimation de canal, constituée par un corrélateur $C_\ell$.

Ce bloc reçoit sur une entrée (1) une séquence numérique $c(1)$, ..., $c(N_{ech})$ de taille $N_{ech}$ et, sur une entrée (2), une séquence numérique $d(1)$, ..., $d(N_{imp})$ de taille $N_{imp}$ et fournit en sortie 2M-1 valeurs réelles $z_m$ pour $m = -(M-1)$, ..., 0, ..., M-1, M étant l'ordre de la modulation de position, telles que :

$$z_m = c((2\ell M + m)N_{imp} + 1)d(1) + c((2\ell M + m)N_{imp} + 2)d(2) + \cdots + c((2\ell M + m + 1)N_{imp})d(N_{imp})$$
$$= \sum_{k=1}^{N_{imp}} c((2\ell M + m)N_{imp} + k)d(k)$$

Le flux de $N_{seq}N_{ech}$ échantillons en sortie de la q$^{ème}$ antenne de réception est donc transformé par le bloc $C_\ell$ en $MN_{seq}$ valeurs réelles $z_m(1)$, ..., $z_m(N_{seq})$ pour $m = -(M-1)$, ..., M-1.

La deuxième partie du bloc d'estimation de canal du récepteur est principalement constituée d'un bloc appelé A, qui comporte des sous-blocs de type A1 et A2 qui vont maintenant être décrits.

Comme le montre la **figure 8**, le sous-bloc A1 reçoit en entrée $N_{seq}$ quantités $a(1)$, ..., $a(N_{seq})$ et fournit en sortie P quantités $y_p$ pour $p = 1$, ..., P telles que :

$$y_p = c_1^{(p)} a(1) + c_2^{(p)} a(2) + \cdots + c_{N_{seq}}^{(p)} a(N_{seq}) = \sum_{n=1}^{N_{seq}} c_n^{(p)} a(n)$$

où $\left[ c_1^{(p)}, \ldots, c_{N_{seq}}^{(p)} \right]$ est le code de parité attribué à la p$^{ème}$ antenne d'émission pendant la phase d'apprentissage.

Ces valeurs sont stockées dans une mémoire et sont utilisées par le bloc A1.

L'autre sous-bloc A2 permet de former une matrice X de taille M×M à partir de 2M-1 valeurs $x_{-(M-1)}$, ..., $x_{M-1}$ telles que :

$$X = \begin{bmatrix} x_0 & x_{-1} & \cdots & x_{-(M-1)} \\ x_1 & \ddots & \ddots & \vdots \\ \vdots & \ddots & \ddots & x_{-1} \\ x_{M-1} & \cdots & x_1 & x_0 \end{bmatrix}$$

Le bloc A, qui forme la matrice d'estimation des canaux, est illustré sur la **figure 9**. Il comporte 2M-1 blocs A1 et P blocs A2. Les blocs A1 reçoivent respectivement en entrée 2M-1 séquences numériques $(a_{1-M}(1), ..., a_{1-M}(N_{seq}))$, ..., $(a_0(1), ..., a_0(N_{seq}))$, ..., $(a_{M-1}(1), ..., a_{M-1}(N_{seq}))$ et leurs sorties sont connectées à l'entrée de chacun des blocs A2. Chaque bloc A2 fournit en sortie une matrice $X_p$, $p = 1$, ..., P de taille M×M du type de la matrice X définie ci-dessus.

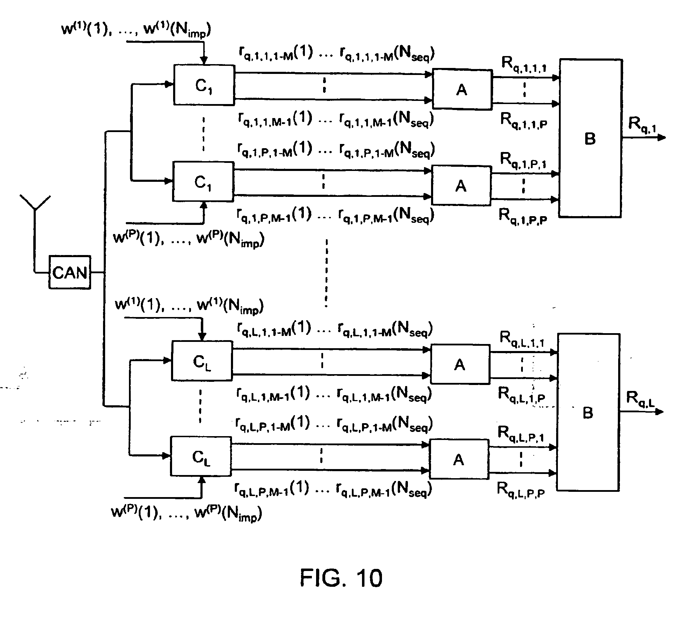

Le schéma-bloc de la **figure 10** illustre l'étage d'estimation de canal qui suit la q$^{ème}$ antenne de réception pour un système de communication ayant P antennes d'émission et un Rake d'ordre L.

Comme le montre la figure 10, $r_{q,\ell,p,m}(n)$ est la sortie du p$^{ème}$ filtre adapté à la sortie de la $\ell^{ème}$ branche de la q$^{ème}$ antenne de réception. En outre, cette sortie correspond à la m$^{ème}$ position nominale du n$^{ème}$ symbole d'apprentissage. $R_{q,\ell,p,p'}$ est une matrice de dimension M×M pour $\ell = 0$, ..., L-1, $p = 1$, ..., P et $p' = 1$, ..., P. $R_{q,\ell}$ est la $\ell^{ème}$ sous-matrice de la matrice du canal vue par la q$^{ème}$ antenne de réception et est de dimension PM×PM.

Pour augmenter la capture d'énergie, la sortie de chaque antenne de réception est divisée en L branches correspondant à un Rake d'ordre L. Cela correspond à l'intégration de l'énergie sur une durée de $2.L.M.T_w$ ns, où $T_w$ est la durée de chaque impulsion. Chacune des L branches est elle-même divisée en P sous-branches, ce qui correspond à la construction de P filtres (blocs $C_\ell$) adaptés aux P impulsions émises par les différentes antennes d'émission.

Dans chaque sous-branche, le bloc A sépare les séquences émises par les différentes antennes et fournit les sous-matrices qui vont constituer la matrice du canal.

Le bloc B est un bloc de concaténation. Il reçoit en entrée les P$^2$ matrices $R_{q,\ell,p,p'}$, pour $p = 1$, ..., P et $p' = 1$, ..., P et fournit en sortie la matrice $R_{q,\ell}$ de dimension PM×PM telle que :

$$R_{q,\ell} = \begin{bmatrix} R_{q,\ell,1,1} & \cdots & R_{q,\ell,1,P} \\ \vdots & \ddots & \vdots \\ R_{q,\ell,P,1} & \cdots & R_{q,\ell,P,P} \end{bmatrix}$$

L'opération effectuée par l'étage d'estimation de la figure 10 est répétée pour chaque antenne de réception, ce qui donne un total de QL matrices $R_{q,\ell}$ pour $\ell = 0$, ..., L-1 et $q = 1$, ..., Q, Q étant le nombre d'antennes de réception. Ces matrices sont concaténées l'une après l'autre pour former la matrice du canal, qui sera notée R, à PQLM lignes et PM colonnes. C'est cette matrice qui va permettre la détection des symboles d'information.

En effet, le récepteur utilise les estimations fournies par l'étage d'estimation de canal pour procéder à la détection des symboles porteurs de l'information. La détection est effectuée trame par trame, c'est-à-dire qu'on détecte les symboles émis par les P antennes pendant une trame (correspondant à une PRP) indépendamment des symboles émis pendant les autres trames.

La phase de détection consiste, d'une part, à construire un vecteur de décision à partir des signaux reçus sur les antennes de réception et, d'autre part, à utiliser ce vecteur ainsi que la matrice du canal pour procéder à la décision sur les symboles émis.

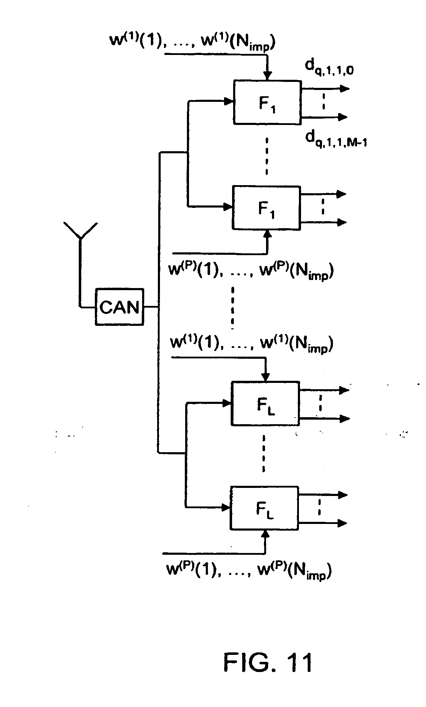

On décrit d'abord l'opération de construction du vecteur de décision au niveau de la $q^{ème}$ antenne de réception, en liaison avec la **figure 11**.

Pour distinguer les antennes d'émission et pour profiter de l'orthogonalité imposée par les impulsions de Hermite de différents ordres, chaque antenne de réception est suivie par P filtres adaptés. De plus, l'énergie présente dans les différents trajets multiples est collectée à l'aide d'un Rake d'ordre L.

L'architecture du module de construction du vecteur de décision est fondée sur un bloc indexé par le nombre de doigts du Rake. Ce bloc est noté $F_\ell$ sur la figure 11. Il effectue le filtrage adapté du signal reçu. Ce bloc a un fonctionnement similaire à celui du bloc $C_\ell$ illustré par la figure 7, à ceci près qu'au lieu de calculer $z_m$ pour m = -(M-1), ... , M-1, il calcule simplement les M quantités $z_m$ pour m = 0, ... , M-1.

A l'issue de la phase de construction du vecteur de décision, un vecteur de décision de longueur PML est formé après chaque antenne de réception. La variable de décision $d_{q,\ell,m,p}$ est la sortie du $p^{ème}$ filtre adapté à la $m^{ème}$ position de modulation pour le $\ell^{ème}$ doigt du Rake placé après la $q^{ème}$ antenne de réception. En ordonnant ces variables, on obtient Q vecteurs $d_q$ de taille PML, chacun pour q = 1, ..., Q :

$$d_{q,\ell,p} = [d_{q,\ell,p,0}, \ldots, d_{q,\ell,p,M-1}]$$

$$d_{q,\ell} = [d_{q,\ell,1}, \ldots, d_{q,\ell,P}]$$

$$d_q = [q_{q,0}, \ldots, d_{q,L-1}]$$

Les vecteurs de décision $d_q$ de chaque antenne de réception sont placés l'un après l'autre pour former le vecteur de décision final de longueur QPLM tel que $d = [d_1, ..., d_Q]$.

On décrit maintenant l'opération de décision proprement dite, qui utilise le vecteur de décision d et la matrice du canal R pour détecter les symboles émis par les P antennes d'émission pendant une PRP.

On commence par calculer un vecteur $a = R^T.(R.R^T)^{-1}.d$, où la matrice $X^{-1}$ est l'inverse de la matrice X et $X^T$ est la transposée de X.

$$a = [a^{(1)}, a^{(2)}, \ldots, a^{(P)}] = [a_0^{(1)} \ldots a_{M-1}^{(1)} a_0^{(2)} \ldots a_{M-1}^{(2)} \ldots \ldots a_0^{(P)} \ldots a_{M-1}^{(P)}]$$

où $a^{(p)} = a^{(p)} = [a_0^{(p)} \ldots a_{M-1}^{(p)}]$ est un vecteur de décision correspondant au symbole émis par la $p^{ème}$ antenne d'émission (p = 1, ... , P). $a_m^{(p)}$, , m = 0, ..., M-1 correspond à la variable de décision du symbole émise par la $p^{ème}$ antenne d'émission pendant la $m^{ème}$ position.

La position nominale de modulation et l'amplitude du symbole émis par la $p^{ème}$ antenne sont ensuite choisies en suivant la règle :

$$\begin{cases} \hat{d}^{(p)} = \hat{\ell} = \arg\max_{m=0,1,\ldots,M-1} \left| a_m^{(p)} \right| \\ \hat{a}^{(p)} = \text{round}(a_{\hat{\ell}}^{(p)}) \end{cases}$$

où la fonction round(x) consiste à choisir l'élément le plus proche de x parmi l'ensemble $\{-(M'-1), \ldots, -1, 1, \ldots, M'-1\}$.

En d'autres termes, la position du maximum du module de $a^{(p)}$ correspond à la position nominale de modulation et l'intervalle où se trouve ce maximum correspond à l'amplitude du symbole émis par la $p^{ème}$ antenne d'émission.

A titre d'exemple non limitatif, dans le cas d'une modulation conjointe 4-PPM-2-PAM pour 2 antennes d'émission, le vecteur a = [1,2 0,5 -0,1 0,01 -0,8 -1,5 0,2 0,5] indique que la première antenne émet dans la position 0 avec une polarité positive et la deuxième antenne émet dans la position 1 avec une polarité négative.

Il est à noter que l'inversion de la matrice R est toujours possible parce que cette matrice n'est jamais mal conditionnée. Cette propriété est assurée grâce à la bande passante du canal, qui est supérieure à 500 MHz, qui permet d'obtenir des fonctions de corrélation proches des fonctions de Dirac.

## Revendications

1. Procédé d'émission de signaux ultra-large bande par l'intermédiaire d'une pluralité d'antennes d'émission, comportant une phase d'émission de séquences d'apprentissage suivie d'une phase d'émission de données, **caractérisé en ce qu'**il comporte une étape suivant laquelle chaque antenne de ladite pluralité d'antennes d'émission émet une forme d'onde utilisant une impulsion de Hermite, unique et orthogonale aux formes d'onde émises par les autres antennes.

2. Procédé selon la revendication 1, **caractérisé en ce qu'**il met en oeuvre une modulation d'impulsions en position ou PPM combinée avec une modulation d'impulsions en amplitude ou PAM.

3. Procédé selon la revendication 1 ou 2, **caractérisé en ce que**, lors de la phase d'émission de séquences d'apprentissage, au niveau de chaque antenne de ladite pluralité d'antennes d'émission, on effectue une multiplication terme à terme d'une séquence de symboles d'apprentissage $(S_{Nseq}, ..., S_1)$ avec une séquence de codes de parité

$\left(c_{Nseq}^{(i)}, \cdots, c_1^{(i)}\right)$ où chaque code de parité vérifie la relation suivante :

$$c_1^{(i)}c_1^{(j)} + c_2^{(i)}c_2^{(j)} + \cdots + c_{Nseq}^{(i)}c_{Nseq}^{(j)} = 0 \text{ pour } i,j = 1, 2, ..., P \text{ et } i \neq j,$$

où $N_{seq}$ est la taille des symboles, $c_k^{(i)}$ est le $k^{ème}$ élément du code de parité de la $i^{ème}$ antenne et P est le nombre total d'antennes d'émission.

4. Dispositif d'émission de signaux ultra-large bande comportant une pluralité d'antennes d'émission, adapté à émettre des séquences d'apprentissage puis des données, **caractérisé en ce que** chaque antenne de ladite pluralité d'antennes d'émission émet une forme d'onde utilisant une impulsion de Hermite, unique et orthogonale aux formes d'onde émises par les autres antennes.

5. Dispositif selon la revendication 4, **caractérisé en ce qu'**il met en oeuvre une modulation d'impulsions en position ou PPM combinée avec une modulation d'impulsions en amplitude ou PAM.

6. Dispositif selon la revendication 4 ou 5, **caractérisé en ce que** chaque antenne de ladite pluralité d'antennes d'émission est adaptée à effectuer une multiplication terme à terme d'une séquence de symboles d'apprentissage $(S_{Nseq}, ..., S_1)$ avec une séquence de codes de parité $\left(c_{Nseq}^{(i)}, \cdots, c_1^{(i)}\right)$ où chaque code de parité vérifie la relation suivante :

$$c_1^{(i)}c_1^{(j)} + c_2^{(i)}c_2^{(j)} + \cdots + c_{Nseq}^{(i)}c_{Nseq}^{(j)} = 0 \text{ pour } i,j = 1, 2, ..., P \text{ et } i \neq j,$$

où $N_{seq}$ est la taille des symboles, $c_k^{(i)}$ est le $k^{ème}$ élément du code de parité de la $i^{ème}$ antenne et P est le nombre total d'antennes d'émission,

7. Procédé de réception de signaux ultra-large bande par l'intermédiaire d'une pluralité d'antennes de réception, **caractérisé en ce qu'**il consiste à recevoir des signaux émis par l'intermédiaire d'un procédé d'émission selon la revendication 1, 2 ou 3 et **en ce qu'**il comprend les étapes suivantes :

- construction d'un vecteur de décision en effectuant, pour chaque antenne de réception, P filtrages adaptés aux impulsions émises par les différentes antennes d'émission, ou P est le nombre, d'antennes d'émission ;
- détection des symboles émis en utilisant le vecteur de décision et une matrice de canal.

**8.** Dispositif de réception de signaux ultra-large bande comportant une pluralité d'antennes de réception, **caractérisé en ce qu'**il est adapté à recevoir des signaux émis au moyen d'un dispositif d'émission selon la revendication 4, 5 ou 6 et **en ce qu'**il comprend :

- un module de construction d'un vecteur de décision apte à effectuer, pour chaque antenne de réception, P filtrages adaptés aux impulsions émises par les différentes antennes d'émission, où P est le nombre d'antennes d'émission ;
- un module de décision apte à détecter les symboles émis en utilisant le vecteur de décision et une matrice de canal.

**Claims**

**1.** Method of sending ultra-wide band signals via a plurality of sending antennas, comprising a phase for sending training sequences followed by a phase for sending data, **characterised in that** it comprises a step according to which each antenna of said plurality of sending antennas sends a waveform using a Hermite pulse that is unique and orthogonal to the waveforms sent by the other antennas.

**2.** Method according to claim 1, **characterised in that** it applies a pulse position modulation (PPM) combined with a pulse amplitude modulation (PAM).

**3.** Method according to claim 1 or 2, **characterised in that**, in the phase for sending training sequences, on each antenna of said plurality of sending antennas, a term-by-term multiplication is performed of a sequence of training symbols ($S_{Nseq}$, ..., $S_1$) with a sequence of parity codes $(c_{Nseq}^{(i)}, \ldots, c_1^{(i)})$ where each parity code satisfies the following relation:

$$c_1^{(i)}c_1^{(j)} + c_2^{(i)}c_2^{(j)} + \ldots + c_{Nseq}^{(i)}c_{Nseq}^{(j)} = 0 \quad \text{for} \quad i, \ j \ = \ 1, \ 2,$$
$$\ldots, \ P \ \text{and} \ i \neq j,$$

where $N_{seq}$ is the size of the symbols, $c_k^{(i)}$ is the kth element of the parity code of the ith antenna and P is the total number of sending antennas.

**4.** Device for sending ultra-wide band signals comprising a plurality of sending antennas, suitable for sending training sequences then data, **characterised in that** each antenna of said plurality of sending antennas sends a waveform using a Hermite pulse that is unique and orthogonal to the waveforms sent by the other antennas.

**5.** Device according to claim 4, **characterised in that** it applies a pulse position modulation (PPM) combined with a pulse amplitude modulation (PAM).

**6.** Device according to claim 4 or 5, **characterised in that** each antenna of said plurality of sending antennas is suitable for performing a term-by-term multiplication of a sequence of training symbols ($S_{Nseq}$, ..., $S_1$) with a sequence of parity codes $(c_{Nseq}^{(i)}, \ldots, c_1^{(i)})$ where each parity code satisfies the following relation:

$$c_1^{(i)}c_1^{(j)} + c_2^{(i)}c_2^{(j)} + \ldots + c_{Nseq}^{(i)}c_{Nseq}^{(j)} = 0 \quad \text{for} \quad i, \ j \ = \ 1, \ 2,$$
$$\ldots, \ P \ \text{and} \ i \neq j,$$

where $N_{seq}$ is the size of the symbols, $C_k^{(i)}$ is the kth element of the parity code of the ith antenna and P is the total number of sending antennas.

7. Method of receiving ultra-wide band signals via a plurality of receiving antennas, **characterised in that** it consists in receiving signals sent via a sending method according to claim 1, 2 or 3, and **in that** it comprises the following steps:

- construction of a decision vector by performing, for each receiving antenna, P filtering operations suited to the pulses sent by the various sending antennas, where P is the number of sending antennas;
- detection of the symbols sent by using the decision vector and a channel matrix.

8. Device for receiving ultra-wide band signals comprising a plurality of receiving antennas, **characterised in that** it is suitable for receiving signals sent by means of a sending device according to claim 4, 5 or 6, and **in that** it comprises:

- a module for constructing a decision vector that is able to perform, for each receiving antenna, P filtering operations suited to the pulses sent by the various sending antennas, where P is the number of sending antennas;
- a decision module that is able to detect the symbols sent by using the decision vector and a channel matrix.

**Patentansprüche**

1. Verfahren zum Senden von Ultrabreitband-Signalen über eine Mehrzahl von Sendeantennen, umfassend eine Phase des Sendens von Lernsequenzen, auf die eine Phase des Sendens von Daten folgt, **dadurch gekennzeichnet, dass** es einen Schritt umfasst, gemäß welchem jede Antenne der Mehrzahl von Sendeantennen eine einzige einen Hermite-Impuls verwendende Wellenform sendet, die zu den von den anderen Antennen gesendeten Wellenformen orthogonal ist.

2. Verfahren nach Anspruch 1, **dadurch gekennzeichnet, dass** es eine Pulsphasenmodulation oder PPM einsetzt, die mit einer Pulsamplitudenmodulation oder PAM kombiniert ist.

3. Verfahren nach Anspruch 1 oder 2, **dadurch gekennzeichnet, dass** man in der Phase des Sendens von Lernsequenzen auf Höhe jeder Antenne der Mehrzahl von Sendeantennen eine termweise Multiplikation einer Sequenz von Lernsymbolen ($S_{Nseq}$, ..., $S_1$) mit einer Sequenz von Paritätscodes $\left(c_{Nseq}^{(i)},...,c_1^{(i)}\right)$ durchführt, in der jeder Paritätscode die folgende Gleichung erfüllt:

$$c_1^{(i)}\,c_1^{(j)} + c_2^{(i)}\,c_2^{(j)} +...+ c_{Nseq}^{(i)}\,c_{Nseq}^{(j)} = 0 \quad \text{bei } i,j = 1, 2,..., P \text{ und } i \neq j,$$

worin $N_{seq}$ die Größe der Symbole ist, $c_k^{(i)}$ das k-te Element des Paritätscode der i-ten Antenne ist und P die Gesamtzahl von Sendeantennen ist.

4. Vorrichtung zum Senden von Ultrabreitbandsignalen, die eine Mehrzahl von Sendeantennen umfasst und dafür ausgelegt ist, Lernsequenzen und dann Daten zu senden, **dadurch gekennzeichnet, dass** jede Antenne der Mehrzahl von Sendeantennen eine einzige einen Hermite-Impuls verwendende Wellenform sendet, die zu den von den anderen Antennen gesendeten Wellenformen orthogonal ist.

5. Vorrichtung nach Anspruch 4, **dadurch gekennzeichnet, dass** sie eine Pulsphasenmodulation PPM einsetzt, die mit einer Pulsamplitudenmodulation oder PAM kombiniert ist.

6. Vorrichtung nach Anspruch 4 oder 5, **dadurch gekennzeichnet, dass** jede Antenne der Mehrzahl von Sendeantennen dafür ausgelegt ist, eine termweise Multiplikation einer Sequenz von Lernsymbolen ($S_{Nseq}$, ..., $S_1$) mit einer Sequenz von Paritätscodes $\left(c_{Nseq}^{(i)},...,c_1^{(i)}\right)$ durchzuführen, in der jeder Paritätscode die folgende Gleichung erfüllt:

$$c_1^{(i)}\, c_1^{(j)}) + c_2^{(i)} c_2^{(j)} + \ldots + c_{Nseq}^{(i)}\, c_{Nseq}^{(j)} = 0 \quad \text{bei } i,j = 1, 2, \ldots, P \text{ und } i \neq j,$$

worin $N_{seq}$ die Größe der Symbole ist, $c_k^{(i)}$ das k-te Element des Paritätscodes der i-ten Antenne ist und P die Gesamtzahl von Sendeantennen ist.

7. Verfahren zum Empfangen von Ultrabreitbandsignalen über eine Mehrzahl von Empfangsantennen, **dadurch gekennzeichnet, dass** es darin besteht, dass Signale empfangen werden, die über ein Sendeverfahren nach Anspruch 1, 2 oder 3 gesendet werden, und dass es die folgenden Schritte umfasst:

- Konstruktion eines Entscheidungsvektors, indem für jede Empfangsantenne P Filterungen durchgeführt werden, die an die von den verschiedenen Sendeantennen gesendeten Impulse angepasst sind, worin P die Anzahl von Sendeantennen ist;
- Erfassung der gesendeten Symbole, indem der Entscheidungsvektor und eine Kanalmatrix verwendet werden.

8. Vorrichtung zum Empfangen von Ultrabreitbandsignalen, die eine Mehrzahl von Empfangsantennen umfasst, **dadurch gekennzeichnet, dass** sie dafür ausgelegt ist, Signale zu empfangen, die mit Hilfe einer Sendevorrichtung nach Anspruch 4, 5 oder 6 gesendet wurden, und dass sie umfasst:

- ein Modul zur Konstruktion eines Entscheidungsvektors, der für jede Empfangsantenne P Filterungen durchführen kann, die an die von den verschiedenen Sendeantennen gesendeten Impulse angepasst sind, worin P die Anzahl von Sendeantennen ist;
- ein Entscheidungsmodul, das die gesendeten Symbole erfassen kann, indem der Entscheidungsvektor und eine Kanalmatrix verwendet werden.

## FIG. 1

## FIG. 2

FIG. 3

FIG. 4

$$c_{Nseq}^{(1)}, \ldots, c_1^{(1)}$$

$w_1(t)$  $S_{Nseq}, \ldots, S_2, S_1$  $\otimes$  Tx

$N_{seq}$

$w_2(t)$  $S_{Nseq}, \ldots, S_2, S_1$  $\otimes$  Tx

$$c_{Nseq}^{(2)}, \ldots, c_1^{(2)}$$

## FIG. 5

$60_1$  $w_1(t)$  1

$60_2$  $w_2(t)$  2

$P$

$60_P$  $w_P(t)$  P

## FIG. 6

$$d(1), ..., d(N_{imp})$$

$$c(1), ..., c(N_{ech})$$

(2)

$C_t$

(1)

$z_{-(M-1)}$

$z_{M-1}$

## FIG. 7

$$a(1), ..., a(N_{seq})$$

A1

$y_1$

$y_P$

## FIG. 8

A

$$a_{1-M}(1), ..., a_{1-M}(N_{seq})$$

A1

A2

$X_1$

$$a_0(1), ..., a_0(N_{seq})$$

A1

$X_p$

$$a_{M-1}(1), ..., a_{M-1}(N_{seq})$$

A1

A2

$X_P$

## FIG. 9

FIG. 10

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. WEISENHORN et al.** Performance of binary antipodal signaling over the indoor UWB MIMO channel. *IEEE conference on communications,* Mai 2003, vol. 4, 2872-2878
- **W. SIRIWONGPAIRAT et al.** On the performance evaluation of TH and DS UWB MIMO systems. *IEEE conference on wireless communications and networking,* 2004, vol. 3, 1800-1805
- **E. BACCARELLI et al.** A simple multi-antenna transceiver for ultra wide band based 4GWLANs. *IEEE WCNC,* Mars 2004, vol. 3, 1782-1787
- **E. BACCARELLI et al.** A novel multi-antenna impulse radio UWB transceiver for broadband high-throughput 4G WLANs. *IEEE communications letters,* Juillet 2004, vol. 8 (7), 419-421